**Europäisches Patentamt**

(19) **European Patent Office**

**Office européen des brevets**

(11) Veröffentlichungsnummer: **0 154 971**

**B1**

(12) **EUROPÄISCHE PATENTSCHRIFT**

(45) Veröffentlichungstag der Patentschrift:
**08.03.89**

(51) Int. Cl.⁴: **C 02 F 1/14**

(21) Anmeldenummer: **85102767.2**

(22) Anmeldetag: **12.03.85**

(54) Süsswassergewinnungsvorrichtung und/oder Bewässerungsvorrichtung.

(30) Priorität: **15.03.84 DE 3409510**

(43) Veröffentlichungstag der Anmeldung:
**18.09.85 Patentblatt 85/38**

(45) Bekanntmachung des Hinweises auf die Patenterteilung:
**08.03.89 Patentblatt 89/10**

(84) Benannte Vertragsstaaten:
**DE FR GB NL**

(56) Entgegenhaltungen:
**GB-A-1 412 971**
**US-A-2 788 316**
**US-A-3 415 719**

(73) Patentinhaber: **Hartwig, Hilmer, Dr., Fruchtallee 115, D-2000 Hamburg 19 (DE)**

(72) Erfinder: **Hartwig, Hilmer, Dr., Fruchtallee 115, D-2000 Hamburg 19 (DE)**

(74) Vertreter: **Dr. E. Wiegand Dipl.- Ing. W. Niemann Dr. M. Kohler Dipl.- Ing. J. Glaeser Dr. H.- R. Kressin Patentanwälte, Königstrasse 28, D-2000 Hamburg 50 (DE)**

## Beschreibung

Die Erfindung bezieht sich auf eine Süßwassergewinnungsvorrichtung und/oder Bewässerungsvorrichtung, bestehend aus rohrförmigen miteinander verbundenen Gefäßen, die an Wasserzufuhrleitungen und Überlaufleitungen angeschlossen sind, wobei der untere Teil der Gefäße aus Wasser und durchlässigem Material besteht (GB-A-1 412 971).

Wasser ist bei jeder Temperatur bestrebt, vom flüssigen in den dampfförmigen Zustand überzugehen. Bei höheren Temperaturen wird jedoch die Wassermenge größer, die den flüssigen Zustand verläßt. Der Wasserdampf ist weiterhin bestrebt, möglichst nach oben zu entweichen, dabei übt aber der Feuchtigkeitsgehalt der Umgebung einen Einfluß aus, da ein trockenes Medium Wasser stärker anzieht als ein feuchtes.

Die Erfindung befaßt sich mit dem Problem, eine Süßwassergewinnungsvorrichtung und/oder Bewässerungsvorrichtung zu schaffen, die ohne komplizierte Einrichtungen, insbesondere ohne mechanisch bewegte Teile, arbeitet. Hierbei soll vorwiegend auch der Einsatz von Salzwasser mit eingeschlossen sein.

Erreicht wird dies durch Vorrichtungen gemäß den Ansprüchen.

Im wesentlichen beruht die Erfindung auf der Idee, salzhaltiges Wasser, welches zur Umgebung relativ erwärmt ist, in einen geschlossenen Raum zu bringen und dort verdampfen zu lassen. Bei einer Süßwassergewinnungs- und Bewässerungsvorrichtung ist ein wasserdampfdurchlässiger Deckel vorgesehen. Da sich in diesem Falle der Bereich des Deckels durch das darüber befindliche Erdreich auf einer niedrigen Temperatur befindet, verflüssigt sich der Wasserdampf, und das darüber befindliche Erdreich ist bestrebt, dieses Wasser aufzunehmen, so daß es den Wurzeln von Pflanzen zugeführt werden kann.

Bei einer Süßwassergewinnungsvorrichtung müssen sich die Behälter nicht im Erdreich befinden, jedoch besteht der Deckel aus wasserundurchlässigem Material. An ihm schlägt sich Süßwasser nieder und wird über die Sammlerrinnen gesammelt.

Mit Hilfe der Vorrichtungen gemäß der Erfindung ist es lediglich notwendig, Salzwasser aus einem Salzwasserreservoir in den Behälter zu pumpen, der Wirkungsgrad der Süßwassergewinnung kann jedoch durch Erwärmung dieses Wassers erhöht werden.

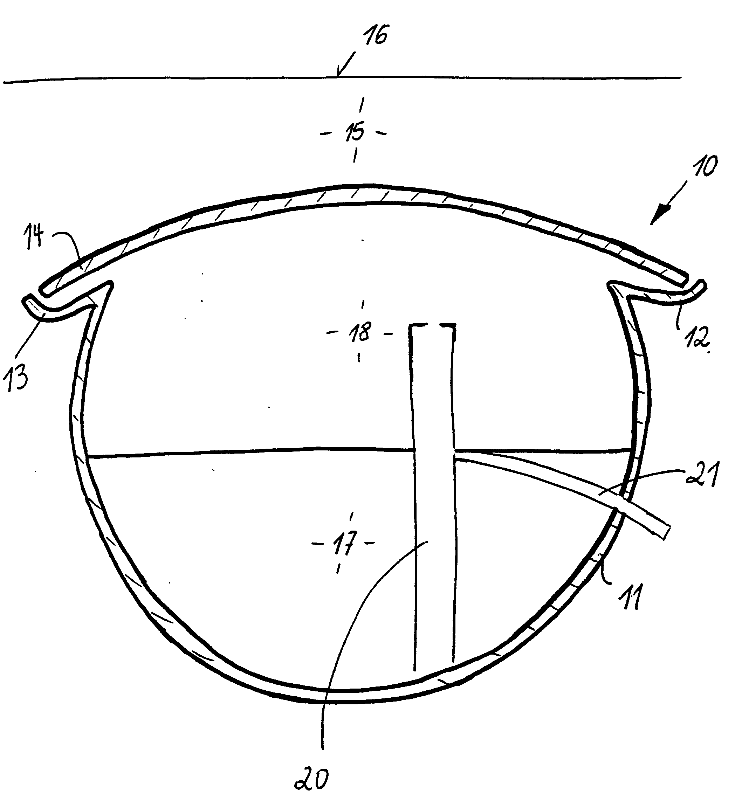

Die Erfindung wird nachstehend an Hand der Zeichnung beispielsweise erläutert.

Die Figur zeigt eine Querschnittsansicht einer im Erdreich befindlichen Vorrichtung gemäß der Erfindung.

Mit 10 ist ein länglicher Behälter gezeigt, der mit einem geeigneten Gefälle im Erdreich 15 unterhalb der Erdoberfläche 16 verlegt worden ist. Dieser Behälter besteht aus einem unteren Teil 11, der aus einem wasserundurchlässigen Material besteht. Der Behälter 11 ist nach oben offen und weist zu beiden Seiten Rinnen 12 und 13 auf. Auf diesen Rinnen ruht ein Deckel 14, der aus wasserdurchlässigem Material besteht. Es kann sich hierbei beispielsweise um eine Keramik oder dergl. handeln.

Nicht gezeigt in der Figur sind die Wasserzuläufe, sowie eine Wasserstandsregeleinrichtung. Ebenfalls nicht gezeigt ist die Heizeinrichtung und der Bereich, aus dem das Wasser genommen wird.

Beispielsweise kann der Behälter 10 über einen Sonnenkollektor mit einem Gewässer, beispielsweise dem Meer, verbunden sein. Auf diese Art und Weise gelangt in das Gefäß 10 Salzwasser, welches im Vergleich zu dem des Gefäßes 10 eine erhöhte Temperatur hat. Das Wasser sammelt sich daher nur zum Teil im Bereich 17, es steigt zum Teil als Wasserdampf 18 nach oben auf und durchdringt den Deckel 14, was natürlich von der Porosität abhängt. Am Deckel kondensiert das Wasser und gelangt in das Erdreich 15, so daß dort befindliche Pflanzenwurzeln mit Wasser versorgt werden. Teilweise sammelt sich das Wasser auch am Deckel 10 und läuft in die Rinnen 12 und 13 ab, von wo es über geeignete Einrichtungen abgenommen werden kann, z. B. für Süßwasserreservoirs.

Mit 20 ist in der Figur ein Steigrohr wiedergegeben, welches im oberen Bereich oberhalb des Wasserstandes eine Entlüftungsöffnung aufweist. Dieses Steigrohr führt in den unteren Teil des Behälters 11. Das Steigrohr selbst ist mit einem Ablaufrohr 21 verbunden, so daß sich der Wasserstand im Inneren des Behälters 10 in etwa auf der Verbindungsstelle zwischen Ablaufrohr 21 und Steigrohr 20 einstellt. Vom Ablaufrohr 21 kann das ablaufende Wasser zurück in den Salzwasserspeicher geführt werden, es kann jedoch nach Erwärmung auch erneut wieder in den Kreislauf gegeben werden. Der Sinn und Zweck der Anordnung des Steigrohres ist, daß das sich im unteren Teil des Behälters befindende salzhaltige Wasser, welches sich zudem auf niedriger Temperatur befindet, abgeleitet wird und nicht etwa das Wasser an der Oberfläche des Wasserspiegels, welches eine höhere Temperatur hat. Auf diese Art und Weise kann der Wirkungsgrad der Anlage erhöht werden.

## Patentansprüche

1. Süßwassergewinnungs- und Bewässerungsvorrichtung, bestehend aus rohrförmigen miteinander verbundenen Gefäßen, die an Wasserzufuhrleitungen und Überlaufleitungen angeschlossen sind, wobei der untere Teil der Gefäße aus einem wasserundurchlässigen Material besteht, dadurch gekennzeichnet, daß die Gefäße (10) mit Erdreich bedeckt sind, und daß der Deckelteil (14) der Gefäße (10) aus einem wasserdampf- bzw. wasserdurchlässigen Material besteht.

2. Vorrichtung nach Anspruch 1, dadurch gekennzeichnet, daß der Deckel (14) gewölbt ausgebildet ist.

3. Vorrichtung nach Anspruch 2, dadurch gekennzeichnet, daß zu beiden Rändern des Deckels Sammlerrinnen ( 12, 13) vorgesehen sind.

4. Vorrichtung nach einem der Ansprüche 1 bis 3, dadurch gekennzeichnet, daß in der Wasserzufuhrleitung eine Heizung, z. B. ein Sonnenkollektor, angeschlossen ist.

5. Vorrichtung nach einem der Ansprüche 1 bis 4, dadurch gekennzeichnet, daß die Wasserzulaufleitung von einem Salzwasserreservoir geführt ist.

6. Süßwassergewinnungsvorrichtung, bestehend aus rohrförmigen miteinander verbundenen Gefäßen, die an Wasserzufuhrleitungen und Überlaufleitungen angeschlossen sind, wobei der untere Teil und der Deckelteil der Gefäße aus einem wasserundurchlässigen Material bestehen, dadurch gekennzeichnet, daß der Deckelteil (14) eine niedrigere Temperatur hat, in der mit einem Salzwasserreservoir verbundenen Wasserzufuhrleitung eine Heizung, z. B. ein Sonnenkollektor, angeschlossen ist, und daß zu beiden Rändern des Deckelteils (14) Sammlerrinnen (12, 13) vorgesehen sind.

## Claims

1. Fresh water production and irrigation plant consisting of tube-shaped vessels joined to each other, which vessels are connected to water feeding lines and overflow lines, the lower portions of said vessels consisting of a waterproof material, characterized in that the vessels (10) are covered with earth, and that the lid element (14) of said vessels (10) consists of a vapor- or water-permeable material.

2. A plant according to claim 1, characterized in that said lid (14) has an arched shape.

3. A plant according to claim 2, characterized in that at both sides of said lid collecting grooves (12, 13) are provided for.

4. A plant according to any one of claims 1 to 3, characterized in that in said water feeding line there is connected a heating, e.g. a solar collector.

5. A plant according to any one of claims 1 to 4, characterized in that the water feeding line starts out from a salt water reservoir.

6. Fresh water production plant consisting of tube-shaped vessels joined to each other, which vessels are connected to water feeding lines and overflow lines, the lower portions and the lid portions of said vessels consisting of water-proof material, characterized in that said lid element (14) has a lower temperature, in that in said water feeding line connected with a salt water reservoir there is connected a heating, e.g. a solar collector, and in that at both edges of said lid element (14) collecting grooves (12, 13) are provided for.

## Revendications

1. Dispositif servant à l'obtention d'eau douce et à l'irrigation, constitué par des récipients tubulaires reliés les uns aux autres, qui sont raccordés à des conduites d'amenée d'eau et de déversement, la partie inférieure des récipients étant en matériau imperméable à l'eau, caractérisé en ce que les récipients (10) sont recouverts par le terrain et en ce que la partie couvercle (14) des récipients (10) est faite d'un matériau perméable à la vapeur d'eau et à l'eau.

2. Dispositif selon la revendication 1, caractérisé en ce que le couvercle (14) est bombé.

3. Dispositif selon la revendication 2, caractérisé en ce que des gouttières collectrices (12, 13) sont prévues aux deux bords du couvercle.

4. Dispositif selon l'une des revendications 1 à 3, caractérisé en ce qu'un organe de chauffage, par exemple un collecteur d'énergie solaire, est monté dans la conduite d'amenée d'eau.

5. Dispositif selon l'une des revendications 1 à 4, caractérisé en ce que la conduite d'amenée d'eau vient d'un réservoir d'eau salée.

6. Dispositif d'obtention d'eau douce, constitué par des récipients tubulaires reliés les uns aux autres, qui sont raccordés à des conduites d'amenée d'eau et à des conduites de déversement, la partie inférieure et la partie couvercle des récipients étant faites d'un matériau imperméable à l'eau, caractérisé en ce que la partie couvercle (14) est à une température relativement basse et un organe de chauffage, par exemple un collecteur d'énergie solaire, est monté dans la conduite d'amenée d'eau, reliée à un réservoir d'eau salée, et en ce que des gouttières collectrices (12, 13) sont prévues aux deux bords de la partie couvercle (14).